# EUROPEAN PATENT APPLICATION

(11) **EP 4 556 767 A1**
(43) Date of publication of application: **21.05.2025**
(21) Application number: 23210125.3
(22) Date of filing: 15.11.2023
(51) Int. Cl.: F16K 11/087, F16K 5/06

(54) **FLUID CONTROL VALVE**

(71) Applicant: VALEO SYSTEMES THERMIQUES, 78320 Le Mesnil Saint-Denis (FR)
(72) Inventor: LIPOWSKI, Mateusz, 32 050 Skawina (PL); POTOK, Dariusz, 32 050 Skawina (PL); GUT, Damian, 32 050 Skawina (PL); NOWAKOWSKI, Adrian, 32 050 Skawina (PL); CIZEK, Konrad, 32 050 Skawina (PL)
(74) Representative: Valeo Systèmes Thermiques

(57) **Abstract**

A fluid control valve (500) for controlling a plurality of fluids from a plurality of fluid circuits comprises a shell (400) and a bushel (100). The shell comprises a plurality of fluid inlet and outlet openings adapted to connect to the plurality of fluid circuits. The bushel is provided inside the shell and rotatable relative to the shell, wherein the bushel comprises a base part (200) and at least one modular part (300) adapted to be axially connected to the base part in different angular positions with respect to the base part. In one example, the bushel comprises one modular part. In another example, the bushel comprises two modular parts.

## Description

### TECHNICAL FIELD

The present invention relates to a fluid control valve, particularly to a multiway fluid control valve.

### BACKGROUND

Generally, a multiway fluid control valve comprises a rotatable bushel inside a stationary shell for controlling a flow of a plurality of fluids in a plurality of fluid circuits. The bushel comprises a plurality of sections for controlling the flow of the plurality of fluids in the plurality of fluid circuits respectively. The shell comprises a plurality of fluid inlet and outlet openings that are brought in fluid communication with each other based on angular position of the bushel within the shell. The plurality of sections of the bushel comprises a plurality of hollow portions that enables fluid communication between the plurality of fluid inlets and outlets based on the angular position of the bushel within the shell, wherein different fluid is selectively supplied in the plurality of fluid circuits based on the angular position of the bushel within the shell. The bushel is made as a single part and the shell is made as a single part. Therefore, a multiway fluid control valve made for a first plurality of fluid circuits cannot be adapted for a second plurality of fluid circuits, and so another multiway fluid control valve has to be designed again for the second plurality of fluid circuits.

### SUMMARY

An objective of the present invention is to provide a fluid control valve that alleviates the problems in the prior arts. To be more precise, an objective of the present invention is to provide a bushel for the fluid control valve that can be adapted to a different number of fluid circuits.

To achieve the above objectives, the present invention herein provides a bushel for a fluid control valve. The bushel for the fluid control valve for controlling a flow of a plurality of fluids in a plurality of fluid circuits comprises: a base part adapted to be received in and rotate relative to a shell of a fluid control valve, wherein the base part is adapted to control a flow of at least one fluid based on angular position of the base part with respect to the shell; and at least one modular part adapted to be received in and rotate relative to the shell, wherein the at least one modular part is adapted to be axially connected to the base part in different angular position with respect to the base part and is adapted to control a flow of at least one fluid based on angular position of the at least one modular part with respect to the shell.

In one aspect, the base part comprises at least one section formed with corresponding guiding means and adapted to control a flow of at least one fluid.

In another aspect, the base part comprises one section formed with one guiding means adapted to control a flow of one fluid based on the angular position of the base part with respect to the shell.

In another aspect, the base part comprises two sections each formed with respective guiding means adapted to control a flow of two fluids respectively based on the angular position of the base part with respect to the shell.

In another aspect, the at least one modular part comprises one section formed with corresponding guiding means, is adapted to control a flow of at least one fluid based on the angular position of the at least one modular part with respect to the shell.

In another aspect, the bushel comprises one modular part formed with one guiding means, wherein the modular part is adapted to control a flow of one fluid.

In another aspect, the modular part is adapted to be connected to the base part in different angular position with respect to the base part and rotate along with the base part.

In another aspect, the base part comprises a first connection member adapted to be connected to a second connection member provided in the modular part.

In another aspect, the bushel comprises two modular parts formed with respective guiding means, wherein the two modular parts are adapted to control a flow of two fluids respectively.

In another aspect, one modular part from the two modular parts, at one end, is adapted to be connected to the base part and at another end, is adapted to be connected to another modular part from the two modular parts.

In another aspect, the two modular parts are adapted to be connected to each other in different angular position with respect to each other and rotate together.

In another aspect, the one modular part from the two modular parts comprises a first connection member adapted to be connected to a second connection member provided in the other modular part from the two modular parts.

In another embodiment, the present invention herein provides a fluid control valve. The fluid control valve for controlling a flow of a plurality of fluids in a plurality of fluid circuits comprises: a shell with a plurality of fluid inlet and outlet openings adapted to connect to the plurality of fluid circuits; and a bushel as described in any one of preceding embodiments, adapted to control the flow of the plurality of fluids, is provided inside the shell and is rotatable relative to the shell.

According to the above embodiments, the bushel for the fluid control valve comprises a base part and at least one modular part, wherein the number of modular parts can be changed based on the number of fluids to be controlled. Therefore, the bushel for the fluid control valve designed for controlling a first number of fluids can be adapted for controlling a second number of fluids with less rework.

### BRIEF DESCRIPTION OF DRAWINGS

Other characteristics, details and advantages of the invention can be inferred from the description of the invention hereunder. A more complete appreciation of the invention and many of the attendant advantages thereof will be readily obtained, as the same becomes better understood by reference to the following description when considered in connection with the accompanying figures, wherein:
FIG. 1 illustrates a bushel for a fluid control valve, in accordance with an embodiment of the present invention;
FIG. 2 illustrates an exploded view of the bushel of FIG. 1;
FIG. 3 illustrates a base part of the bushel of FIG. 1;
FIG. 4 illustrates another view of the base part of the bushel of FIG. 1;
FIG. 5 illustrates a modular part of the bushel of FIG. 1;
FIG. 6 illustrates another view of the modular part of the bushel of FIG. 1;
FIG. 7 illustrates an exploded view of the bushel of FIG. 1, in accordance with another embodiment of the present invention;
FIG. 8 illustrates the fluid control valve with the bushel of FIG. 1; and
FIG. 9 illustrates an exploded view of the fluid control valve of FIG. 8.

### DETAILED DESCRIPTION OF PREFERRED EMBODIMENTS

It must be noted that the figures disclose the invention in a detailed enough way to be implemented, the figures helping to better define the invention, if need be. The invention should however not be limited to the embodiments disclosed in the description.

In the present description, some elements or parameters may be indexed, such as a first element and a second element. In this case, unless stated otherwise, this indexation is only meant to differentiate and name elements that are similar but not identical. No idea of priority should be inferred from such indexation, as these may be switched without betraying the invention. Additionally, this indexation does not imply any order in mounting or use of the elements of the invention.

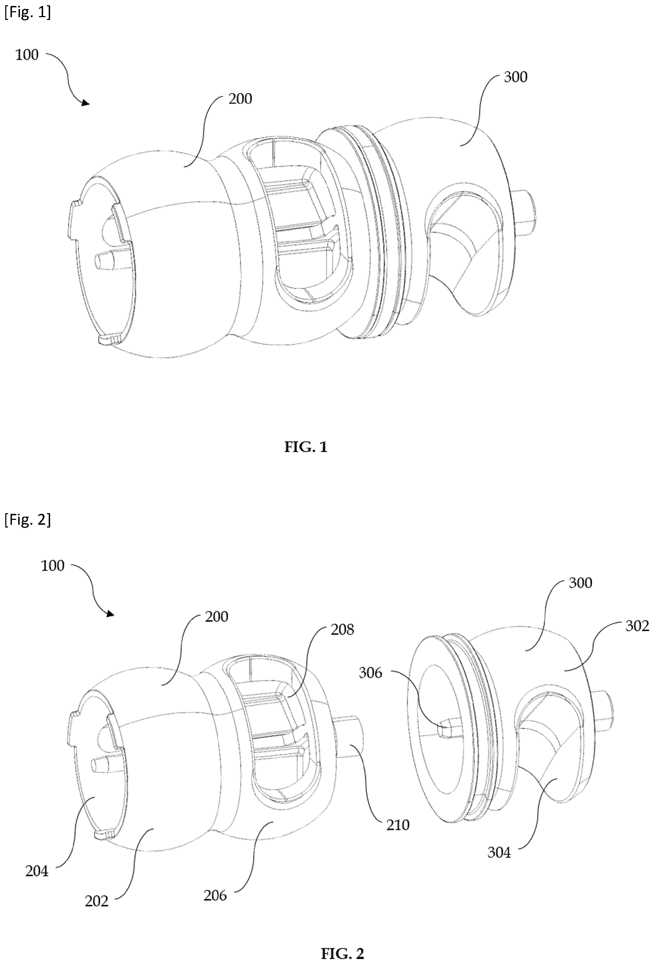

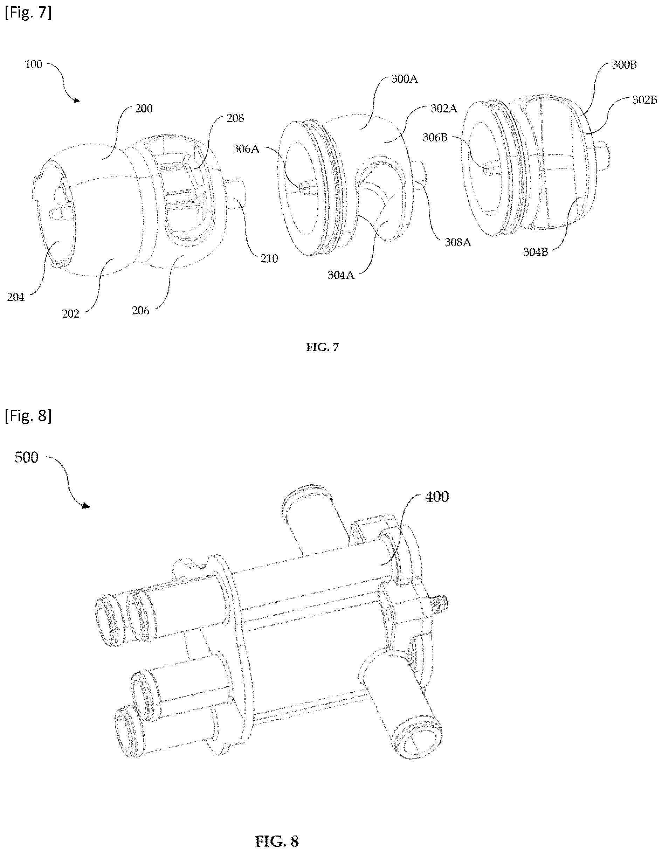

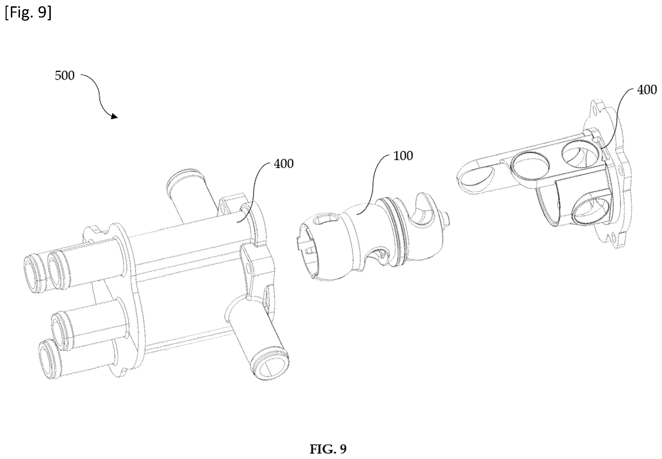

FIG. 1 illustrates a bushel 100 for a fluid control valve 500, in accordance with an embodiment of the present invention. FIG. 2 illustrates an exploded view of the bushel 100 of FIG. 1. The bushel 100 for the fluid control valve 500 (shown in FIG. 8 and FIG. 9) controlling a plurality of fluids from a plurality of fluid circuits comprises a base part 200 and at least one modular part 300. In one embodiment, the bushel 100 for the fluid control valve 500 controlling a plurality of fluids from the plurality of fluid circuits can comprise a base part 200 that is adapted to control at least one fluid. The bushel 100 can comprise at least one modular part 300 that is adapted to connect to the base part 200 and control one fluid.

In one aspect, the base part 200 can be adapted to be received in and rotate relative to a shell 400 (shown in FIG. 8 and FIG. 9) of the fluid control valve 500. In another aspect, the base part 200 can be adapted to control at least one fluid based on angular position of the base part 200 with respect to the shell 400. In one example, the base part 200 can be adapted to control one fluid in one angular position of the base part 200 with respect to the shell 400. In another example, the base part 200 can be adapted to control two fluids in two angular positions of the base part 200 with respect to the shell 400. The base part 200 can be adapted to control one fluid in one angular position of the base part 200 with respect to the shell 400 and control another fluid in another angular position of the base part 200 with respect to the shell 400.

In another aspect, the at least one modular part 300 can be adapted to be received in and rotate relative to the shell 400 of the fluid control valve 500. In another aspect, the at least one modular part 300 can be adapted to axially connect to the base part 200 in different angular position with respect to the base part 200. In another aspect, the at least one modular part 300 can be adapted to control at least one fluid based on angular position of the at least one modular part 300 with respect to the shell 400. In another example, the at least one modular part 300 can be adapted to control one fluid in one angular position of the at least one modular part 300 with respect to the shell 400. In another example, the at least one modular part 300 can be adapted to control two fluids in two angular positions of the at least one modular part 300 with respect to the shell 400. The at least one modular part 300 can be adapted to control one fluid in one angular position of the at least one modular part 300 with respect to the shell 400 and control another fluid in another angular position of the at least one modular part 300 with respect to the shell 400.

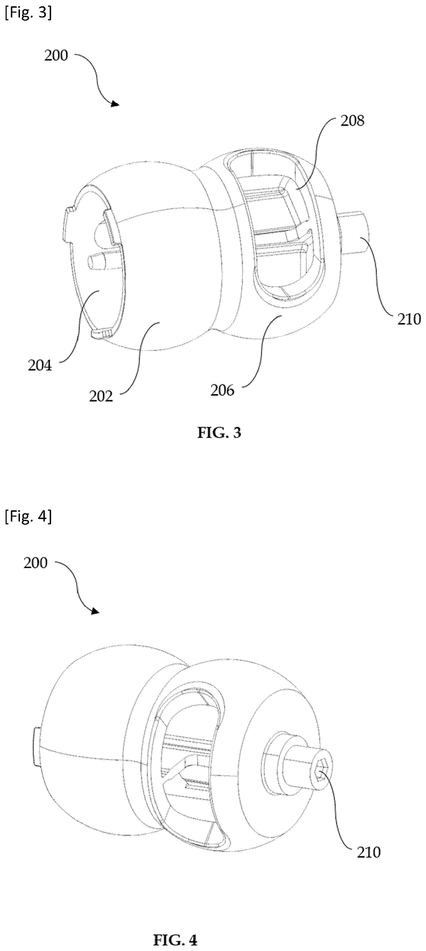

FIG. 3 and FIG. 4 illustrate two different views of the base part 200 of the bushel 100 of FIG. 1. In another aspect, the base part 200 can comprise at least one section 202, 206 that is adapted to control at least one fluid. In another example, the base part 200 can comprise one section 202 that is adapted to control one fluid. In another example, the base part 200 can comprise two sections 202, 206 that are adapted to control two fluids respectively. In another aspect, the two sections 202, 206 can comprise two guiding means 204, 208 respectively, wherein the two guiding means 204, 208 can be adapted to guide the two fluids respectively. In another example, the two guiding means 204, 208 can be two hollow portions respectively, wherein the two hollow portions can be adapted to guide the two fluids respectively.

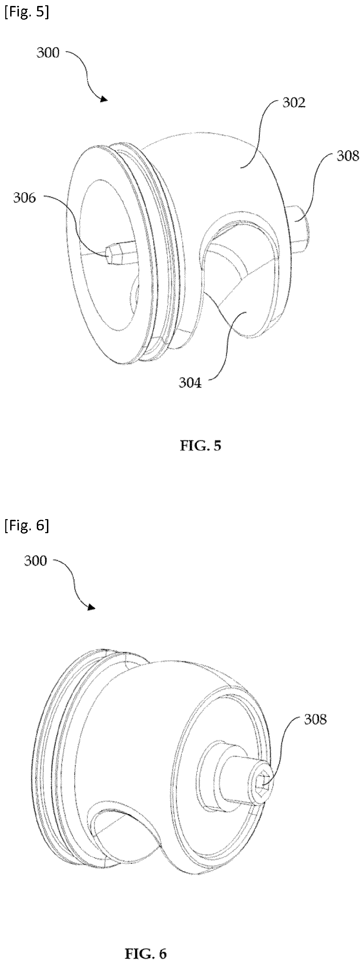

FIG. 5 and FIG. 6 illustrate two different views of the modular part 300 of the bushel 100 of FIG. 1. In another aspect, the at least one modular part 300 can comprise one section 302 that is adapted to control at least one fluid. In another example, the bushel 100 can comprise one modular part 300 that is adapted to control one fluid. In another aspect, the modular part 300 can comprise one section 302 that is adapted to control one fluid. The section 302 of the modular part 300 can comprise one guiding means 304 that is adapted to guide the fluid. In another example, the guiding means 304 of the section 302 of the modular part 300 can be a hollow portion that is adapted to guide the fluid.

In another aspect, the modular part 300 can be adapted to connect to the base part 200 in different angular position with respect to the base part 200 and rotate along with the base part 200. In another aspect, the base part 200 can comprise a first connection member 210 that is adapted to connect to the modular part 300. In another example, the first connection member 210 can be a cavity. In another example, the first connection member 210 can be a polygon shaped cavity. In another example, the first connection member 210 can be a hexagon shaped cavity. In another aspect, the modular part 300 can comprise a second connection member 306 that is adapted to connect to the first connection member 210 of the base part 200. In another example, the second connection member 306 can be a protrusion. In another example, the second connection member 306 can be a polygon shaped protrusion. In another example, the second connection member 306 can be a hexagon shaped protrusion. In another aspect, the first connection member 210 of the base part 200 together with the second connection member 306 of the modular part 300 can be adapted to lock rotation of the modular part 300 with respect to the base part 200. In another aspect, the bushel 100 can comprise a sealing member at an interface between the base part 200 and the modular part 300 to provide fluid isolation between the base part 200 and the modular part 300.

FIG. 7 illustrates an exploded view of the bushel 100 of FIG. 1, in accordance with another embodiment of the present invention. In another example, the bushel 100 can comprise two modular parts 300A, 300B that are adapted to control two fluids respectively. In another aspect, the two modular parts 300A, 300B can comprise two sections 302A, 302B respectively, wherein the two sections 302A, 302B can comprise two guiding means 304A, 304B respectively that are adapted to guide the two fluids respectively.

In another aspect, one modular part 300A from the two modular parts 300A, 300B, at one end, can be adapted to connect to the base part 200 and at another end, can be adapted to connect to another modular part 300B from the two modular parts 300A, 300B. In another aspect, the one modular part 300A from the two modular parts 300A, 300B can be adapted to connect to the base part 200 in different angular position with respect to the base part 200 and rotate together. In another aspect, the base part 200 can comprise a first connection member 210 that is adapted to connect to the one modular part 300A from the two modular parts 300A, 300B. The one modular part 300A from the two modular parts 300A, 300B can comprise a second connection member 306A that is adapted to connect to the first connection member 210 of the base part 200. In another aspect, the first connection member 210 of the base part 200 together with the second connection member 306A of the one modular part 300A from the two modular parts 300A, 300B can be adapted to lock rotation of the one modular part 300A from the two modular parts 300A, 300B with respect to the base part 200.

In another aspect, the two modular parts 300A, 300B can be adapted to connect to each other in different angular position with respect to each other and rotate together. In another aspect, the one modular part 300A from the two modular parts 300A, 300B can comprise a first connection member 308A that is adapted to connect to the other modular part 300B from the two modular parts 300A, 300B. The other modular part 300B from the two modular parts 300A, 300B can comprise a second connection member 306B that is adapted to connect to the first connection member 308A of the one modular part 300A from the two modular parts 300A, 300B. In another aspect, the first connection member 308A of the one modular part 300A from the two modular parts 300A, 300B together with the second connection member 306B of the other modular part 300B from the two modular parts 300A, 300B can be adapted to lock rotation of the two modular parts 300A, 300B with respect to each other. In another aspect, the bushel 100 can comprise a first sealing member at a first interface between the base part 200 and the one modular part 300A to provide fluid isolation between the base part 200 and the one modular part 300A, and a second sealing member at a second interface between the two modular parts 300A, 300B to provide fluid isolation between the two modular parts 300A, 300B.

FIG. 8 illustrates the fluid control valve 500 with the bushel 100 of FIG. 1. FIG. 9 illustrates an exploded view of the fluid control valve 500 of FIG. 8. In another embodiment, the fluid control valve 500 for controlling the plurality of fluids from the plurality of fluid circuits can comprise a shell 400 and the bushel 100 as described in any one of the above embodiments. In another aspect, the shell 400 can comprise a plurality of fluid inlet and outlet openings that are adapted to connect to the plurality of fluid circuits. In another aspect, the bushel 100 can be provided inside the shell 400 and rotatable relative to the shell 400. In another aspect, the bushel 100 can adapted to control the plurality of fluids by rotating the bushel 100 between a plurality of angular positions with respect to the shell 400. In another example, the bushel 100 can be adapted to control three fluids by rotating the bushel 100 between three angular positions with respect to the shell 400. In another example, the bushel 100 can be adapted to control four fluids by rotating the bushel 100 between four angular positions with respect to the shell 400.

According to above-described embodiments, the bushel 100 for the fluid control valve 500 comprises a base part 200 and at least one modular part 300, wherein the number of modular parts 300 can be changed based on the number of fluids to be controlled. Therefore, the bushel 100 for the fluid control valve 500 designed for controlling a first number of fluids can be adapted for controlling a second number of fluids with less rework.

All the above-described embodiments are just to explain the present invention while more embodiments and combinations thereof might exist. Hence, the present invention should not be limited to the above-described embodiments alone.

## Claims

1. A bushel (100) for a fluid control valve (500) for controlling a flow of a plurality of fluids in a plurality of fluid circuits comprises:
a base part (200) adapted to be received in and rotate relative to a shell (400) of the fluid control valve (500), wherein the base part (200) is adapted to control a flow of at least one fluid based on angular position of the base part (200) with respect to the shell (400); and
at least one modular part (300) adapted to be received in and rotate relative to the shell (400), wherein the at least one modular part (300) is adapted to be axially connected to the base part (200) in different angular position with respect to the base part (200) and is adapted to control a flow of at least one fluid based on angular position of the at least one modular part (300) with respect to the shell (400).

2. The bushel (100) as claimed in preceding claim, wherein the base part (200) comprises at least one section (202, 206) formed with corresponding guiding means (204, 208) and adapted to control a flow of at least one fluid.

3. The bushel (100) as claimed in preceding claim, wherein the base part (200) comprises one section (202) formed with one guiding means (204) adapted to control a flow of one fluid based on the angular position of the base part (200) with respect to the shell (400).

4. The bushel (100) as claimed in claim 2, wherein the base part (200) comprises two sections (202, 206) each formed with respective guiding means (204, 208) adapted to control a flow of two fluids respectively based on the angular position of the base part (200) with respect to the shell (400).

5. The bushel (100) as claimed in any one of preceding claims, wherein the at least one modular part (300) comprises one section (302) formed with corresponding guiding means (304), is adapted to control a flow of at least one fluid based on the angular position of the at least one modular part (300) with respect to the shell (400).

6. The bushel (100) as claimed in preceding claim comprises one modular part (300) formed with one guiding means (304), wherein the modular part (300) is adapted to control a flow of one fluid.

7. The bushel (100) as claimed in preceding claim, wherein the modular part (300) is adapted to be connected to the base part (200) in different angular position with respect to the base part (200) and rotate along with the base part (200).

8. The bushel (100) as claimed in preceding claim, wherein the base part (200) comprises a first connection member (210) adapted to be connected to a second connection member (306) provided in the modular part (300).

9. The bushel (100) as claimed in claim 5 comprises two modular parts (300A, 300B) formed with respective guiding means (304A, 304B), wherein the two modular parts (300A, 300B) are adapted to control a flow of two fluids respectively.

10. The bushel (100) as claimed in preceding claim, wherein one modular part (300A) from the two modular parts (300A, 300B), at one end, is adapted to be connected to the base part (200) and at another end, is adapted to be connected to another modular part (300B) from the two modular parts (300A, 300B).

11. The bushel (100) as claimed in preceding claim, wherein the two modular parts (300A, 300B) are adapted to be connected to each other in different angular position with respect to each other and rotate together.

12. The bushel (100) as claimed in preceding claim, wherein the one modular part (300A) from the two modular part (300A, 300B) comprises a first connection member (308A) adapted to be connected to a second connection member (306B) provided in the other modular part (300B) from the two modular parts (300A, 300B).

13. A fluid control valve (500) for controlling a flow of a plurality of fluids in a plurality of fluid circuits comprises:
a shell (400) with a plurality of fluid inlet and outlet openings adapted to connect to the plurality of fluid circuits; and
a bushel (100) as claimed in any one of preceding claims, adapted to control the flow of the plurality of fluids, is provided inside the shell (400) and is rotatable relative to the shell (400).
